# EUROPEAN PATENT SPECIFICATION

(11) **EP 1 946 655 B1**
(45) Date of publication and mention of the grant of the patent: **10.02.2010**
(21) Application number: 06125769.7
(22) Date of filing: 11.12.2006
(51) Int. Cl.: A23L 1/2165, A23L 1/216

(54) **Product for mashed potatoes with a coarse texture**
Produkt für Kartoffelpüree mit grobkörniger Struktur
Produit pour purée de pommes de terre à gros grains

(43) Date of publication of application: 23.07.2008
(73) Proprietor: Nestec S.A., 1800 Vevey (CH)
(72) Inventor: Dierikx, Cornelis, 1017 JL Amsterdam (NL)
(74) Representative: Thomas, Alain

(56) References cited:
- DE-A1- 2 135 394
- DE-A1- 2 827 015
- GB-A- 1 473 036
- US-A- 5 702 741
- US-A1- 2004 175 486
- DATABASE WPI Week 197738 Derwent Publications Ltd., London, GB; AN 1977-68020Y XP002430326 & JP 52 096765 A (NISSHIN OIL MILLS LTD) 13 August 1977 (1977-08-13)

## Description

The present invention relates to a dehydrated potato product for instant mashed potatoes.

Dehydrated potato products have been known for many years. Such products have been available in forms such as potato flakes and potato powders (granules, agglomerates). Such products provide convenience for the preparation of mashed potatoes in the home without the need for time consuming steps of peeling, dicing, cooking and mashing. The products are available in different versions, e.g., with different flavourings such as butter or garlic and more recently in versions meeting specific dietary needs, such as low-fat and low carbohydrate versions.

A problem with the dehydrated potato products that are presently on the market is that they provide mashed potatoes that possess a texture that at least some consumers consider as not being satisfactory. The fine and light texture of the mashed potatoes prepared from instant powder products gives a sticky feeling upon eating, which nowadays consumers do not like at all. Consumers prefer a coarser product with more bite.

GB 1 473 036 provides dry potato flakes which can be reconstituted with boiling water and which are prepared by cooking potatoes, forming a puree and spraying the puree with an aqueous suspension containing whey protein and/or egg albumin to incorporate 2-12% by weight thereof into the puree and then drying the puree and forming flakes. Only by the addition of protein before drying the puree it is possible to reconstitute potato flakes at boiling temperature and produce the desired light consistency.

DE 21 35 394 A1 discloses dehydrated potato products comprising milk powder.
US 2004/175486 A1 relates to a composition comprising a mixture of dehulled soybean flakes and potato flakes, for making a soy enriched and soy oil containing mashed potato product having excellent nutritional, taste and texture properties.

The present invention provides a dehydrated potato product that provides mashed potatoes with a coarser texture and more bite.

Thus, in a first aspect, the present invention provides a dehydrated potato product for the preparation of mashed potatoes, the product comprising from about 80% to about 95% (w/w) potato and from about 1% to about 10% (w/w) of egg protein that coagulates under the conditions of preparation of the mashed potatoes, wherein the product is composed of potato-containing particles, protein-containing particles, and, optionally, additives, and wherein the potato-containing particles contain less that 2% (w/w) of said protein.

Unless indicated otherwise, percentages used in this invention are based on total weight of the composition.

Products of the invention are dehydrated instant products and the primary component of the dehydrated instant product is potato.

The potato may originate from any potato variety that is suitable for the preparation of a dehydrated potato product for the preparation of mashed potatoes.

According to the invention, the dehydrated potato product further contains egg protein that coagulates under conditions of preparation of mashed potatoes. In this way, mashed potatoes prepared from the dehydrated product surprisingly possesses a coarse texture and provides a good bite.

A protein that coagulates under conditions of preparation of mashed potatoes from a dehydrated product, also referred to as coagulating protein, should thus coagulate when stirred into hot water having a temperature of at least 75 °C, preferably at least 85 °C. The protein should preferably coagulate within one minute after stirring into hot water.

The coagulating protein may be present in the dehydrated potato product in a concentration of about 1% to about 10% (w/w), preferably of about 2% to about 7%, more preferably of about 3% to about 5%.

The coagulating protein to be used in the dehydrated potato product may be a single protein species or may be a mixture of two or more different proteins. Preferably, the coagulating protein contains albumin in a concentration of about 20% to about 100% (w/w) based on the dry weight of the total protein. More preferably, the albumin content is 25% to 80% (w/w), even more preferably 30% to 60% (w/w).

The protein to be used in the dehydrated potato product is egg protein, preferably egg white protein. The egg may be from any bird, provided that the egg protein is suitable for use in food. Preferably, the egg is a chicken egg.

The dehydrated potato product of the invention further contains additives. Additives may include fats such as hardened vegetable oils; vitamins; milk solids such as lactose, casein; emulsifiers such as lecithin, mono- and diglycerides; anti-oxidants such as sodium metabisulfite BHA, BHT; food-grade acids such as citric acid; thickeners such as carrageenan; fibers such as grain fiber, potato fiber; flavourings such as salt, pepper, herbs, butter notes. Some of the additives may be packed separately from the instant potato product of the invention.

The dehydrated potato product of the invention is composed of potato-containing particles and protein-containing particles, wherein the potato-containing particles contain less that 2% (w/w) of said protein, based on total weight of the potato particles. Preferably, the potato-containing particles contain less that 1.5%, more preferably less than 1% of said protein. The protein-containing particles typically contain less than 10% (w/w) potato, based on total weight of the protein particles, preferably less than 2% potato, more preferably are free of potato.

The potato-containing particles may conveniently be in any form that is commonly known for dehydrated potato products, preferably in the form of powder or flakes. More preferably, the potato-containing particles are in powder form. The term "powder" refers to a powder form of the product obtainable by any suitable means, including granulation, agglomeration, milling, sieving, and the like. The protein-containing particles may have any size, but preferably have a similar form and/or size as the potato-containing particles.

In a second aspect, the present invention provides a process for the preparation of the potato product of the first aspect. In the process of the second aspect, the protein that coagulates under conditions of preparation of mashed potatoes is added in the dry stage, subsequent to preparation of the dehydrated potato particles. The process comprises the steps of preparing dehydrated potato particles and mixing the potato particles with the coagulating protein particles. Most of the additives are also added in the dry stage, and the protein particles are preferably added simultaneously with the additives.

Processes to prepare a dehydrated instant potato product are commonly known in the art. Such processes typically comprise the steps as mentioned below. Potatoes for such products are processed prior to cooking by washing to remove adhering soil, peeling, and forming into pieces by slicing or dicing or grating. The peeling may be done by means of steam and lye peeling or by abrasion or any other known process. The potato pieces are then cooked, typically in a steam bath or by boiling. The cooking may involve a first blanching step and a second cooking step, or merely one combined cooking step. The potato pieces are then mashed and dehydrated and formed into their final shapes by various processes known in the art. Any conventional processing steps may be used as desired. For example, the potato pieces may be partially dehydrated prior to cooking or the drying and dehydration may be conducted after the potatoes are cooked.

Processing aids and other additives as specified above may be added at any suitable stage of the process. For instance, the potatoes may be treated chemically before cooking, for example with citric acid, ascorbic acid and the like, to prevent darkening of the potato pieces. However, most of the additives may be added in the dry stage, i.e. mixed with the potato particles after drying. It is also possible to pack some of the additives separately from the instant potato powder, for addition when preparing the mashed potatoes.

Particles of the egg protein that coagulates under conditions of preparation of mashed potatoes are preferably mixed into the dehydrated potato particles, preferably simultaneously with the additives. The mixing is preferably done inline. The coagulating protein particles preferably have about the same size and/or form as the potato particles.

Dehydrated coagulating protein is commercially available, for instance dehydrated egg white from Ovobest (Germany), Bouwhuis Enthoven (the Netherlands) or Igreca (France).

The final dehydrated potato product typically has a stable moisture content of less than 10%, for instance 8.7%.

The final product may be packed in sachets, preferably under a protective atmosphere, for direct use by the consumer.

Mashed potatoes prepared from dehydrated instant potato products of the invention advantageously have an improved texture and have a mouthfeel and bite more like fresh, home made mashed potatoes to the eater, when compared to a similar instant potato product without added coagulating protein. Such sensory characterizations may include specific factors which can be tested such as stiffness or firmness, stickiness, slipperiness, surface wetness, cohesiveness, moistness, adhesiveness to the palate and the like.

## Claims

1. A dehydrated potato product for the preparation of mashed potatoes, the product comprising from 80% to 95% (w/w) potato and from 1% to 10% (w/w, based on total weight of the dehydrated product) of egg protein that coagulates under the conditions of preparation of the mashed potatoes, wherein the product is composed of potato-containing particles and protein-containing particles, and, optionally, additives, and wherein the potato-containing particles contain less that 2% (w/w, based on total weight of the potato particles) of said protein.

2. The potato product of claim 1 comprising 2% to 7% (w/w), preferably 3% to 5% (w/w) of the protein.

3. The potato product of claim 1 or 2, wherein the protein contains albumin in a concentration of 20 to 100% (w/w) based on total protein dry weight.

4. The potato product of any one of claims 1-3, wherein the protein is egg white protein.

5. The potato product of claim 4, wherein the egg is from chicken.

6. The potato product of any one of claims 1-5, further comprising an additive.

7. The potato product of claim 6, wherein the additive includes fats, vitamins, milk solids, emulsifiers, antioxidants, food-grade acids, thickeners, fibers and/or flavourings.

8. The potato product of claim any one of claims 1-7, wherein the particles are in flake and/or powder form.

9. A method for the preparation of the potato product of any one of the preceding claims comprising the steps of preparing dehydrated potato-containing particles and mixing the dehydrated potato-containing particles with dehydrated egg protein, wherein the potato-containing particles are defined as in claim 1.

10. Use of the potato product of any one of the claims 1-8 for the preparation of mashed potatoes.

## Patentansprüche

1. Dehydriertes Kartoffelprodukt für die Zubereitung eines Kartoffelpürees, wobei das Produkt von 80 % bis 95 % (Gew./Gew.) Kartoffel und von 1 % bis 10 % (Gew./Gew., bezogen auf ein Gesamtgewicht des dehydrierten Produkts) Eierprotein aufweist, das unter Zubereitungsbedingungen für das Kartoffelpüree koaguliert, wobei das Produkt aus kartoffelhaltigen Partikeln und proteinhaltigen Partikeln und optional Zusatzstoffen zusammengesetzt ist, und wobei die kartoffelhaltigen Partikel weniger als 2 % (Gew./Gew., bezogen auf ein Gesamtgewicht der Kartoffelpartikel) des Proteins enthalten.

2. Kartoffelprodukt nach Anspruch 1, aufweisend 2 % bis 7 % (Gew./Gew.), vorzugsweise 3 % bis 5 % (Gew./Gew.), des Proteins.

3. Kartoffelprodukt nach Anspruch 1 oder 2, wobei das Protein Albumin in einer Konzentration von 20 bis 100 % (Gew./Gew.), basierend auf einem Gesamt-Protein-Trockengewicht enthält.

4. Kartoffelprodukt nach irgendeinem der Ansprüche 1 - 3, wobei das Protein Eiereiweißprotein ist.

5. Kartoffelprodukt nach Anspruch 4, wobei das Ei von Hühnern ist.

6. Kartoffelprodukt nach irgendeinem der Ansprüche 1 - 5, das ferner ein Additiv aufweist.

7. Kartoffelprodukt nach Anspruch 6, wobei der Zusatzstoff Fette, Vitamine, feste Milchbestandteile, Emulgatoren, Antioxidanzien, Säuren in Lebensmittelqualität, Verdickungsmittel, Fasern und/oder Geschmacksstoffe umfasst.

8. Kartoffelprodukt nach irgendeinem der Ansprüche 1 - 7, wobei die Partikel in Flocken- und/oder Grießform vorliegen.

9. Verfahren zur Herstellung des Kartoffelprodukts nach irgendeinem der vorstehenden Ansprüche, das die Schritte des Herstellens von dehydrierten kartoffelhaltigen Partikeln und des Vermischens der dehydrierten kartoffelhaltigen Partikel mit dehydriertem Eierprotein aufweist, wobei die kartoffelhaltigen Partikel wie in Anspruch 1 definiert sind.

10. Verwendung des Kartoffelprodukts nach irgendeinem der Ansprüche 1 - 8 für die Herstellung eines Kartoffelpürees.

## Revendications

1. Produit à la pomme de terre, déshydratée, pour la préparation de purée de pomme de terre, le produit comprenant de 80% à 95% (p/p) de pomme de terre et de 1% à 10% (p/p, sur base du poids total du produit déshydraté) de protéine d'oeuf qui coagule dans les conditions de préparation de la purée de pomme de terre, dans lequel le produit se compose de particules contenant de la pomme de terre et de particules contenant de la protéine et, le cas échéant, d'additifs, et dans lequel les particules contenant de la pomme de terre contiennent moins de 2% (p/p sur base du poids total des particules de pomme de terre) de ladite protéine.

2. Produit à la pomme de terre selon la revendication 1, comprenant 2% à 7% (p/p), de préférence 3% à 5% (p/p) de la protéine.

3. Produit à la pomme de terre selon la revendication 1 ou 2, dans lequel la protéine contient de l'albumine à une concentration de 20 à 100% (p/p) sur base du poids sec total de la protéine.

4. Produit à la pomme de terre selon l'une quelconque des revendications 1-3, dans lequel la protéine est une protéine du blanc d'oeuf.

5. Produit à la pomme de terre selon la revendication 4, dans lequel l'oeuf est un oeuf de poule.

6. Produit à la pomme de terre selon l'une quelconque des revendications 1-5, comprenant de plus un additif.

7. Produit à la pomme de terre selon la revendication 6, dans lequel l'additif comprend graisses, vitamines, solides du lait, émulsionnants, antioxydants, acides de qualité alimentaire, fibres et/ou arômes.

8. Produit à la pomme de terre selon l'une quelconque des revendications 1-7, dans lequel les particules sont sous la forme de flocons et/ou de poudre.

9. Procédé de préparation du produit à la pomme de terre selon l'une quelconque des revendications qui précèdent, comprenant les étapes consistant à préparer des particules contenant de la pomme de terre déshydratée, et à mélanger les particules contenant de la pomme de terre déshydratée à une protéine d'oeuf déshydratée, dans lequel les particules contenant de la pomme de terre sont comme défini dans la revendication 1.

10. Utilisation du produit à la pomme de terre de l'une quelconque des revendications 1-8, pour la préparation de purée de pomme de terre.
